# EUROPÄISCHE PATENTANMELDUNG

(11) **EP 2 148 152 A2**
(43) Veröffentlichungstag der Anmeldung: **27.01.2010**
(21) Anmeldenummer: 09007376.8
(22) Anmeldetag: 04.06.2009
(51) Int. Cl.: F24J 2/20, F24J 2/46

(54) **Solarkollektor und dessen Herstellungsverfahren**

(30) Priorität: 26.07.2008 DE 102008035054
(71) Anmelder: Robert Bosch GmbH, 70442 Stuttgart (DE)
(72) Erfinder: Clement, Uwe, 73114 Schlat (DE)

(57) **Zusammenfassung**

Die Erfindung betrifft ein Verfahren zur Herstellung eines Solarkollektors (1) mit einem Solarkollektorgehäuse (3) und einem darin angeordneten, von einem Solarfluid durchströmbaren Absorber (4), sowie ein nach diesem Verfahren hergestellten Solarkollektorgrundkörper (2) und ein den Solarkollektorgrundkörper (2) aufweisenden Solarkollektor (1).

Es ist eine Aufgabe der Erfindung, einen Solarkollektorgrundkörper (2) sowie einen Solarkollektor (1) mit einem Solarkollektorgrundkörper (2) und ein Verfahren zu deren Herstellung zu schaffen, mit welchen die Nachteile gemäß dem Stand der Technik überwunden werden. Insbesondere ist es eine Aufgabe der Erfindung, einen Solarkollektorgrundkörper (2) und einen Solarkollektor (1) mit einem Solarkollektorgrundkörper (2) sowie ein Herstellungsverfahren für diese zu schaffen, welche einen geringeren Materialaufwand und geringere Fertigungszeiten erfordern.

Gekennzeichnet ist das Verfahren dadurch, dass das Solarkollektorgehäuse (3) und zumindest ein Teil des Absorbers (4) durch Umformen und/oder Urformen als integriertes Bauteil hergestellt werden.

## Beschreibung

Die Erfindung betrifft ein Verfahren zur Herstellung eines Solarkollektors mit einem Solarkollektorgehäuse und einem darin angeordneten, von einem Solarfluid durchströmbaren Absorber nach dem Oberbegriff des Patentanspruches 1. Weiter betrifft die Erfindung einen Solarkollektorgrundkörper, insbesondere ein Solarkollektorgrundkörper für einen vollflächig durchströmbaren Solarflachkollektor nach dem Oberbegriff des Patentanspruchs 8. Zudem betrifft die Erfindung einen Solarkollektor, insbesondere ein Solarflachkollektor, nach dem Oberbegriff des Patentanspruchs 10.

Solarkollektoren, insbesondere Solarflachkollektoren sind allgemein bekannt. Derartige Solarkollektoren bestehen aus einem Solarkollektorgrundkörper, der ein Solarkollektorgehäuse und einen darin angeordneten Absorber aufweist. Der Absorber ist als solarfluiddurchstömbarer Fluidkanal oder entsprechend als Fluidkanalsystem ausgebildet. Das Fluidkanalsystem umfasst in herkömmlichen Ausführungsformen ein Rohr oder mehrere Rohre, welche an entsprechenden Halterungen befestigt sind, beispielsweise an beschichteten Kupfer- oder Aluminiumblechen. Der separat ausgeführte Absorber wird in das Solarkollektorgehäuse, welches ebenfalls eine separate Baugruppe bildet, eingesetzt und daran befestigt. Dabei bildet der Absorber eine separate Baueinheit. Der Aufwand zur Herstellung eines derartigen Solarkollektors ist relativ hoch. Insbesondere sind der Materialaufwand und die Fertigungszeiten hoch.

Der Erfindung liegt die Aufgabe zugrunde, einen Solarkollektorgrundkörper sowie einen Solarkollektor mit einem Solarkollektorgrundkörper und ein Verfahren zu deren Herstellung zu schaffen, mit welchen die Nachteile gemäß dem Stand der Technik überwunden werden. Insbesondere ist es eine Aufgabe der Erfindung, einen Solarkollektorgrundkörper und einen Solarkollektor mit einem Solarkollektorgrundkörper sowie ein Herstellungsverfahren zu schaffen, welche einen geringeren Materialaufwand und geringere Fertigungszeiten erfordern.

Erfindungsgemäß wird dies durch die Gegenstände mit den Merkmalen des Patentanspruches 1, des Patentanspruchs 8 und des Patentanspruchs 10 gelöst. Vorteilhafte Weiterbildungen sind den Unteransprüchen zu entnehmen.

Das erfindungsgemäße Verfahren zur Herstellung eines Solarkollektors mit einem Solarkollektorgehäuse und einem darin angeordneten, von einem Solarfluid durchströmbaren Absorber ist **dadurch gekennzeichnet, dass** der Absorber mehrteilig ausgebildet wird und das Solarkollektorgehäuse und zumindest ein Teil des Absorbers durch Umformen und/oder Urformen als integriertes Bauteil hergestellt werden. Der Solarkollektor weist einen Solarkollektorgrundkörper auf, umfassend ein Solarkollektorgehäuse und einen in dem Solarkollektorgehäuse angeordneten Absorber, wobei der Absorber von einem Solarfluid durchströmbar ist. Der Absorber lässt sich durch ein geeignetes Urformverfahren oder ein Umformverfahren oder einer Kombination daraus zumindest teilweise integriert mit dem Solarkollektorgehäuse ausbilden. Der Solarkollektorgrundkörper besteht im Wesentlichen aus dem Solarkollektorgehäuse und dem Absorber. Der Absorber ist ein Leitungssystem, welches von einem Solarfluid durchströmbar ist. Das Leitungssystem umfasst einen Fluidkanal oder mehrere Fluidkanäle. Das Solarkollektorgehäuse ist so ausgebildet, dass es den Absorber aufnimmt. Erfindungsgemäß sind das Solarkollektorgehäuse und zumindest ein Teil des Absorbers integriert ausgebildet. Hierdurch muss der Absorber nicht mehr in einem eigenen Fertigungsschritt mit dem Solarkollektorgehäuse befestigt werden. Durch die integrierte Fertigungsweise sind weniger separate Schritte zur Fertigung eines Absorbers und eines Solarkollektorgehäuses erforderlich.

In einer Ausführungsform des erfindungsgemäßen Solarkollektorgrundkörpers ist vorgesehen, dass das Umformen kombiniert mit einem Schäumverfahren, insbesondere mit einem Sprayverfahren zum Herstellen von lang- oder endlosfaserverstärkten Sandwichbauteilen nach Art eines sogenannten Composite-Spray-Molding-Verfahrens (CSM-Verfahren), durchgeführt wird. Bei diesem Verfahren kann auf eine massive formgebende und/oder stabilisierende Umhüllung verzichtet werden. Ein bevorzugtes Urformverfahren stellt das Schäumverfahren, insbesondere ein Kunststoffschäumverfahren wie das Polyurethanschäumverfahren dar. Auf diese Weise lassen sich Absorber und Gehäuse in einem Fertigungsschritt auf einfache Weise integriert miteinander ausbilden.

Bei einer weiteren Ausführungsform ist vorgesehen, dass das Schäumverfahren mittels mindestens eines Trennmittels zum besseren Entformen durchgeführt wird.

In noch einer weiteren Ausführungsform der vorliegenden Erfindung ist vorgesehen, dass mindestens eine Schutzfolie als ein Trennmittel verwendet wird.

Ein Ausführungsbeispiel der vorliegenden Erfindung sieht vor, dass das Umformen den Schritt umfasst: Umformen mindestens einer Schutzfolie, zum Beispiel mittels Thermotiefziehen, zur Ausbildung eines einen solarfluidkontaktierenden Bereich zumindest teilweise abdeckenden Wannenteils, sodass dort zumindest teilweise ein Solarfluid geeignet strömen kann.

Ein weiteres Ausführungsbeispiel sieht vor, dass das Schäumen die Schritte umfasst: Einbringen des mindestens einen Trennmittels in mindestens ein Formwerkzeug, Einbringen mindestens eines Schäummaterials in das Formwerkzeug und Ausformen des Schäummaterials zu dem fertigen Bauteil.

Noch ein weiteres Ausführungsbeispiel der vorliegenden Erfindung sieht vor, dass der Schritt Einbringen mindestens eines Schäummaterials den Schritt umfasst: Einbringen von Verstärkungsmitteln in das Schäummaterial.

Alternativ zum vorstehend beschriebenen Herstellverfahren kann auch eine Beschichtung innerhalb der Form auf die gesamte Oberfläche des Werkzeuges aufgesprüht werden. Dabei handelt es sich um ein sogenanntes In-mould-coating, insbesondere auf Basis von Polyurethan (PUR).

Die für das vorstehend beschriebene Herstellverfahren erforderliche thermoplastische Schutzfolie, welche als Trennmittel zwischen Schaummaterial und Werkzeug sowie als Barriereschutz zwischen Solarfluid und Schaummaterial dient, kann hierbei entfallen. Somit besteht dann auch nicht die Problematik, dass möglicherweise in extrem ungünstigen Betriebszuständen, also bei extrem hohen Temperaturen, das Bauteil durch unterschiedliche Temperaturausdehnungskoeffizienten der thermoplastischen Schutzfolie und des duroplastischen Schaummaterials stark belastet wird. Außerdem können das zusätzlich benötigte Werkzeug sowie der erforderliche Tiefziehprozess, zum Formen der Folie entfallen.

Nach dem Aufbringen der Beschichtung innerhalb der Form auf die gesamte Oberfläche des Werkzeuges wird beim Schäumen in diesem Fall das Schaummaterial, insbesondere Polyurethan (PUR), einschließlich erforderlicher Verstärkungsmaterialien, wie beispielseise Glasfasern oder Füllkörper, insbesondere Hartschaumkerne, ins noch offene Werkzeug eingebracht und dann das Werkzeuges so lange geschlossen, bis der Schaumwerkstoff ausgehärtet ist. Dann wird das Werkzeug geöffnet und das Bauteil entformt. Anschließend kann sofort oder nach einer optionalen Vorbehandlung der Klebstoff aufgebracht und der Absorber bzw. die Glasabdeckung eingelegt werden.

Der Lackierungsprozess ist somit in den Schäumungsprozess integriert. Es sind kein separater Lackierungsprozess und keine zusätzliche Aushärtungsphase des Lackes erforderlich, wobei der Prozess schon nach einer sehr kurzen Anhärtezeit von etwa einer Minute auf der Oberfläche des Werkzeuges fortgeführt werden kann.

Der erfindungsgemäße Solarkollektorgrundkörper, insbesondere ein Solarkollektorgrundkörper für einen vollflächig durchströmbaren Solarflachkollektor, umfassend ein Solarkollektorgehäuse und einen zumindest teilweise in dem Solarkollektorgehäuse angeordneten Absorber, wobei der Absorber von einem Solarfluid durchströmbar ist, ist **dadurch gekennzeichnet, dass** der Absorber zumindest teilweise integriert mit dem Solarkollektorgehäuse ausgebildet ist.

In einer Ausführungsform ist vorgesehen, dass das Solarkollektorgehäuse aus einem Schäummaterial geformt ist, in oder an welchem eine umgeformte MultifunktionsSchutzfolie ausgebildet ist, die solarfluidresistent und/oder zumindest ein Entformen und/oder ein Verkleben erleichternd ausgebildet ist. Ein Material für eine derartige Folie könnte ausgewählt sein aus der Gruppe umfassend thermoplastische Kunststoffe und dergleichen.

Bevorzugt ist der mit dem Solarkollektorgehäuse integriert ausgebildete Teil des Absorbers als mindestens ein Fluidkanal mit zumindest einer Umfangsöffnung ausgeformt, sodass dieser als umfänglich zumindest teilweise offener Fluidkanal ausgebildet ist. Zur urformtechnischen oder gießtechnischen Optimierung der integrierten Fertigungsweise weist der Absorber eine Struktur auf, die in eine Entnahmerichtung aus einem Werkzeug geöffnet ist, das heißt mit einer umfänglichen Öffnung. Der so gebildete Fluidkanal ist umfänglich nicht geschlossen, sondern ist teilweise geöffnet. An der Verbindung zu dem Solarkollektorgehäuse ist der Fluidkanal geschlossen ausgebildet. Vorgesehen ist weiter, dass die Umfangsöffnung etwa bündig in einer Ebene an eine Wandung des Fluidkanals unter Bildung von einer Auflagefläche angrenzt, sodass der Fluidkanal mittels einer ebenen Abdeckplatte umfänglich verschließbar ist. Um den Fluidkanal umfänglich abzudichten, ist die Umfangsöffnung so ausgebildet, dass die Öffnung mittels einer Platte oder einem anderen einfachen Bauteil verschlossen werden kann. Bevorzugt wird an die Auflagefläche ein adhäsives Mittel wie ein Klebstoff aufgebracht, um die Platte mit dem Fluidkanal fest zu verbinden und den Fluidkanal solarfluiddicht abzudichten. Der Solarkollektorgrundkörper kann auch etwa becherförmig (rinnenförmig) mit einem Gehäuseboden, einer Gehäusewandung und einem von dem Gehäuseboden und der Gehäusewandung aufgespannten Innenraum ausgebildet sein. Bevorzugt ist der Absorber in dem Gehäuseinnenraum ausgebildet. Der Absorber ist so in dem Innenraum angeordnet, dass dieser nicht aus dem Innenraum über die Gehäusewandung herausragt. Bevorzugt ist der Gehäuseboden in Form einer quaderförmigen Platte und einer umlaufenden, rahmenartigen Gehäusewandung ausgebildet.

Der erfindungsgemäße Solarkollektor, insbesondere der Solarflachkollektor, umfassend einen Solarkollektorgrundkörper mit einem Solarkollektorgehäuse und einem darin angeordneten, durchströmbaren Absorber und eine an den Absorber angrenzende Abdeckplatte, ist **dadurch gekennzeichnet, dass** der Solarkollektorgrundkörper gemäß dem erfindungsgemäßen Solarkollektorgrundkörper gemäß dem Vorstehenden ausgebildet ist.

Insbesondere sieht eine Ausführungsform des erfindungsgemäßen Solarkollektors vor, dass mindestens eine der mit einem Solarfluid kontaktierbaren Oberflächen solarfluiddicht ausgebildet ist.

Mit dem erfindungsgemäßen Solarkollektorgrundkörper, dem erfindungsgemäßen Solarkollektor und dem erfindungsgemäßen Herstellverfahren werden insbesondere die folgenden Vorteile realisiert:
Durch die integrierte Bauweise ist ein kompakter Aufbau möglich, welcher die Herstellung von sehr flachen Kollektoren, das heißt von Flachkollektoren mit einer geringen Kollektorhöhe, ermöglicht. Weiterhin lassen sich durch die integrierte Bauweise bis zu 50 % des im Stand der Technik benötigten Absorbermaterials einsparen.

Durch die Verwendung einer tiefgezogenen, umgeformten Folie als Trennmittel lassen sich die Vorteile eines Sprayverfahrens zum Herstellen von lang- oder endlosfaserverstärkten Sandwichbauteilen, also eines CSM-Verfahrens, und eines Sandwichverfahrens nutzen, wobei deren Nachteile, wie ein störendes Trennmittel an der Bauteiloberfläche, vermieden werden. Die Folie lässt sich multifunktional nutzen:
Erstens lässt sich die Folie dazu einsetzen, dass filigrane Strukturen in dem CSM-Verfahren ohne Anhaften von störendem Trennmittel möglich sind. Zweitens dient die Folie als Trennmittel zwischen Schaummaterial und Werkzeug. Drittens ermöglicht die Folie nachfolgende Prozessschritte wie Kleben, insbesondere im Bereich der Folie. Viertens dient die Folie als Barriereschutz des Schaummaterials vor Solarfluid. Die Schutzfolie wird bevorzugt nur in Bereichen eingesetzt, in denen diese Vorteile ausgenutzt werden sollen, insbesondere an Fluidkontaktstellen und Klebestellen.

Darüber hinaus lassen sich erfindungsgemäße Flachkollektoren mit wenigen wesentlichen Fertigungsschritten herstellen:
Zunächst wird die Schutzfolie mit einem Umformverfahren, wie z. B. Thermotiefziehen, so gestaltet, dass sie den gesamten solarfluidberührten Teil abdeckt und eine wannenähnliche oder rinnenähnliche Struktur oder ähnlich aufweist, in der das Solarfluid fließen kann. Beim Umformen können sehr feine Strukturen abgebildet werden.

Dann wird die Schutzfolie typischerweise in ein Oberteil eines Schäumwerkzeuges eingelegt. Die nicht mit der Schutzfolie bedeckten Oberflächen des gesamten Werkzeuges (Ober- und Unterteil) werden an bestimmten Bereichen mit einem entsprechenden Trennmittel zum besseren Entformen versehen. An diese Bereiche werden bezüglich der weiteren Bearbeitbarkeit keine erhöhten Anforderungen gestellt. Dann wird Schaummaterial, z. B. Polyurethan, inklusive gegebenenfalls erforderlichen Verstärkungsmaterialien, wie z. B. Glasfasern, ins noch offene Werkzeug eingebracht. Das Werkzeug wird geschlossen, bis der Schaumwerkstoff ausgehärtet ist. Schließlich wird das Werkzeug geöffnet und das Bauteil entformt. Anschließend kann sofort oder nach einer optionalen Vorbehandlung der Klebstoff aufgebracht und der Absorber bzw. die Glasabdeckung eingelegt werden. Nach einer Aushärtungsphase ist der Kollektor hergestellt.

Genauer wird der Solarkollektorgrundkörper mittels eines geeigneten Materials wie beispielsweise Polyurethan geschäumt. Hierbei wird der Solarkollektorgrundkörper mittels des Polyurethanschäumverfahrens hergestellt. Dazu werden in ein hierfür erforderliches Werkzeug, genauer ein Werkzeugunterteil, auch für das Solarkollektorgehäuse benötigte Halterungen, Kollektorbefestigungen, Sensoren, Leitungen und/oder Hydraulikanschlüsse, je nach Ausbildung des Solarkollektors, eingelegt und Polyurethan eingebracht. Eine Werkzeugoberseite, oder genauer ein Werkzeugoberteil, ist als Negativform der Kanäle, eines Verteilerbereichs und/oder eines Sammlerbereichs ausgebildet, in welchen mehrere Kanäle zum Beispiel zusammen- oder auseinanderlaufen. Die Strukturen lassen sich in beliebigen dreidimensionalen Strukturen ausbilden. Die Werkzeuge werden für das Verfahren entsprechend aufeinander gefahren, so dass das Polyurethan bei geschlossenem Werkzeug aushärten kann.

In einem weiteren Schritt können entsprechende solarfluidkontaktierende Gehäuseoberflächen oder -innenflächen infiltriert, ausgegossen oder mit einer Beschichtung überzogen werden. Somit erfolgt ein Abdichten gegen das Solarfluid, wenn dort die Anbringung einer Schutzfolie nicht möglich ist, oder zusätzlich zu einer Schutzfolie. Dieser Schritt ist optional und unter anderem von dem eingesetzten Fluid und der Form der Folie abhängig. Damit das Polyurethan über die gesamte Lebensdauer solarfluidresistent, zum Beispiel wasserresistent bleibt, werden bevorzugt alle solarfluidkontaktierenden Oberflächen in dem Solarkollektorgehäuse mit einer Schutzbeschichtung, einem sogenannten Liner, oder dergleichen infiltriert und/oder überzogen. Der Liner oder ein vergleichbarer Stoff kann zum Beispiel aufgesprüht, dosiert oder in einem Tauchverfahren aufgebracht werden.

In einem anderen Schritt erfolgt das Auftragen eines adhäsiven Mittels, zum Beispiel eines Klebstoffes. Hierbei wird an allen Auflageflächen zwischen der Absorberplatte und dem Solarkollektorgrundkörper sowie auf den Auflageflächen zwischen einem Abdeckglas und dem Solarkollektorgehäuse Klebstoff aufgetragen oder dosiert. Der Klebstoff kann auf den Gehäuse- oder Grundkörperflächen, der Absorberplatte und/oder dem Abdeckglas aufgebracht werden. Bevorzugt wird der Klebstoff an speziell dafür ausgebildeten Bereichen, insbesondere der dafür präparierten Schutzfolie angebracht.

Ein weiterer Schritt sieht vor, dass die Absorberplatte in oder auf den Solarkollektorgrundkörper aufgelegt wird. Hierdurch werden zum Beispiel die umfänglichen Öffnungen der Fluidkanäle des Absorbers verschlossen. Ein anderer Schritt sieht vor, dass nach dem Anordnen der Absorberplatte die Glasabdeckung an dem Solarkollektorgrundkörper angeordnet wird. Nicht zuletzt erfolgt ein Aushärteprozess, in dem der Liner und/oder die Klebeverbindungen aushärten.

Die Zeichnungen stellen ein Ausführungsbeispiel der Erfindung sowie dessen Herstellung dar und zeigen in den Figuren:
- Fig. 1: schematisch einen Querschnitt durch eine Ausführungsform eines erfin- dungsgemäßen Solarkollektors,
- Fig. 2: schematisch eine Schutzfolie vor und nach einem Umformen,
- Fig. 3: schematisch ein geöffnetes Formwerkzeug mit eingebrachter Schutzfolie,
- Fig. 4: schematisch ein geöffnetes Formwerkzeug mit eingelegten Schutzfolien, Schäummaterial und Verstärkungsmitteln und
- Fig. 5: schematisch ein geschlossenes Formwerkzeug mit ausgehärtetem Solarkol- lektorgrundkörper.

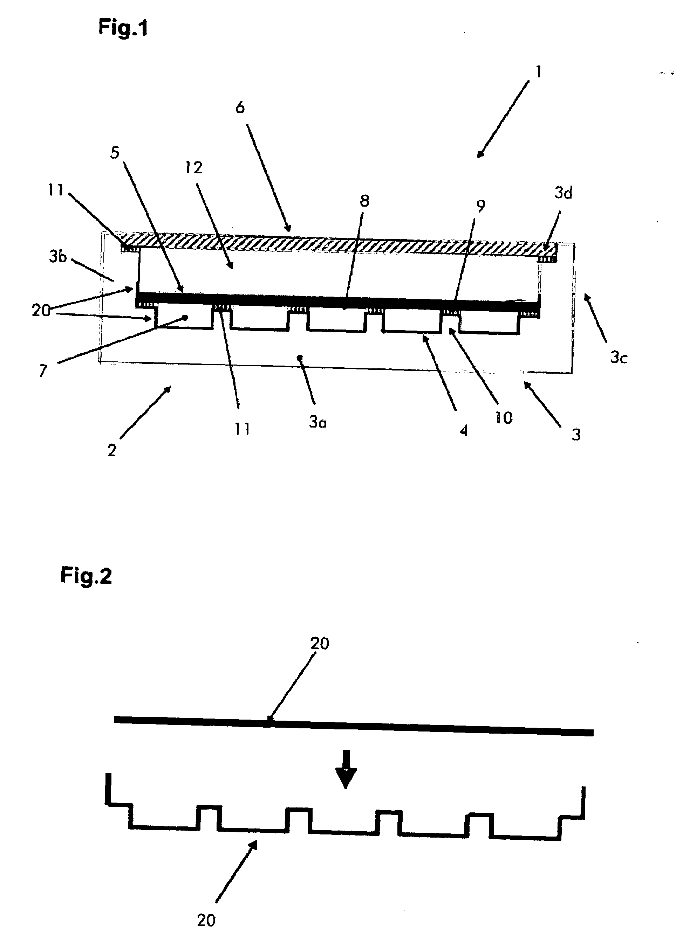

Fig. 1 zeigt schematisch einen Querschnitt durch eine Ausführungsform eines erfindungsgemäßen Solarkollektors 1. Der Solarkollektor 1 umfasst einen Solarkollektorgrundkörper 2, der wiederum ein Solarkollektorgehäuse 3 und einen Absorber 4 umfasst. Zudem umfasst der Solarkollektor 1 eine Absorberplatte 5 und eine Glasabdeckung 6.

Das Solarkollektorgehäuse 3 ist vorliegend becherförmig (rinnenförmig) mit einem Boden 3a und einer Wandung 3b ausgebildet. Der Boden 3a ist vorzugsweise plattenförmig ausgebildet, mit einer in der Draufsicht im Wesentlichen rechteckigen Kontur. An dem Rand des Bodens 3a erhebt sich die Wandung 3b, die vorliegend als zumindest teilweise umlaufender Rahmen ausgebildet ist. Der Rahmen weist in einem oberen Teil 3c einen inneren Absatz 3d auf, an welchem die Glasabdeckung 6 aufgenommen werden kann.

Der Absorber 4 ist teilweise integriert mit dem Solarkollektorgehäuse 3 ausgebildet. In der dargestellten Figur umfasst der Absorber 4 Fluidkanäle 7, durch welche ein Solarfluid strömen kann. Die Fluidkanäle 7 weisen einen etwa rechteckigen Querschnitt in dem in den Figuren dargestellten Ausführungsbeispiel auf und sind teilweise integriert, das heißt einteilig mit dem Solarkollektorgehäuse 3 ausgebildet, genauer mittels eines Urformverfahrens ausgeformt, zum Beispiel mittels Polyurethanschäumens. Vorliegend sind in Schnittrichtung fünf Fluidkanäle 7 ausgeformt. Die Fluidkanäle 7 sind umfänglich teilweise geöffnet, das heißt, es ist eine Umfangsöffnung 8 je Fluidkanal 7 vorgesehen. Bevorzugt weitet sich der Fluidkanal 7 in die Richtung zur Umfangsöffnung 8, so dass der Solarkollektorgrundkörper 2 urformtechnisch optimiert ausgebildet ist.

Damit ein Solarfluid durch den Solarkollektor 1 optimiert zirkulieren kann, sind die Fluidkanäle 7 des Absorbers 4, genauer die Umfangsöffnungen 8 mittels der Absorberplatte 5 abgedichtet. Die Absorberplatte 5 ist in der Figur als ebene Abdeckplatte ausgeführt. Um eine optimale Abdichtung der Fluidkanäle 7 zu ermöglichen, sind Auflageflächen 9, welche durch eine Fluidkanalwandung 10 und die daran angrenzende Umfangsöffnung 8 definiert sind, plan und/oder eben ausgebildet, um eine optimale Auflage für die Absorberplatte 5 zu ermöglichen. Um die Absorberplatte 5 fest an dem Absorber 4 anzubringen und so eine optimale Abdichtung zu gewährleisten, ist die Absorberplatte 5 mittels eines adhäsiven Mittels 11, wie zum Beispiel einem Klebstoff, an dem Absorber 4 befestigt. Dabei ist das adhäsive Mittel 11 auf einer Schutzfolie 20 angebracht, welche entlang der Kontur der Fluidkanäle 7 und den Auflageflächen 9 ausgebildet ist, sodass die Schutzfolie 20 als Zwischenschicht zwischen dem Absorber 4 und der Absorberplatte 5 fungiert. Die Schutzfolie 20, genauer deren Herstellung ist weiter unten detaillierter beschrieben. Bevorzugt ist die Absorberplatte 5 so ausgebildet, dass sie von dem Rahmen des Solarkollektorgehäuses eingefasst, das heißt seitlich anliegend umgrenzt ist.

Die Glasabdeckung 6 ist ebenfalls plattenförmig ausgebildet. Durch den Absatz 3d ist eine Auflagefläche für die Glasabdeckung 6 gebildet, sodass die Glasabdeckung 6 eingefasst von dem Rahmen ist. Die Glasabdeckung 6 ist beabstandet zu der Absorberplatte 5 ausgebildet, sodass ein Zwischenraum 12 zwischen Absorberplatte 5, Solarkollektorgehäuse 3 und Glasabdeckung 6 gebildet ist. Entsprechend ist der Absatz 3d beabstandet von dem Boden 3a ausgebildet. Zwischen dem Absatz 3d und der Glasabdeckung 6 ist ebenfalls ein adhäsives Mittel 11 angeordnet, um die Glasabdeckung 6 fest mit dem Solarkollektorgehäuse 3 zu verbinden. Der so ausgebildete Solarkollektor 1 ist als kompakter, quaderförmiger Flachkollektor ausgebildet mit einer geringen Kollektorhöhe.

Fig. 2 zeigt schematisch die Schutzfolie 20 vor und nach einem Umformen. Die Schutzfolie 20 ist vor dem Umformen als dünne Schicht aus einem solarfluidresistenten Material ausgebildet. Mittels eines geeigneten Umformverfahrens, beispielsweise durch ein Thermotiefziehen, wird die Schutzfolie 20 derart umgeformt, dass diese den Konturen der Fluidkanäle 7 entspricht. Insbesondere ist die Schutzfolie 20 nach dem Thermotiefziehen derart ausgebildet, dass diese den gesamten solarfluidkontaktierenden Bereich bedeckt und eine wannenähnliche Struktur oder dergleichen aufweist, in welcher Solarfluid fließen kann. Mittels des Thermotiefziehverfahrens lassen sich sehr detaillierte Strukturen realisieren, die eine optimale strömungstechnische Verteilung eines Solarfluids ermöglichen.

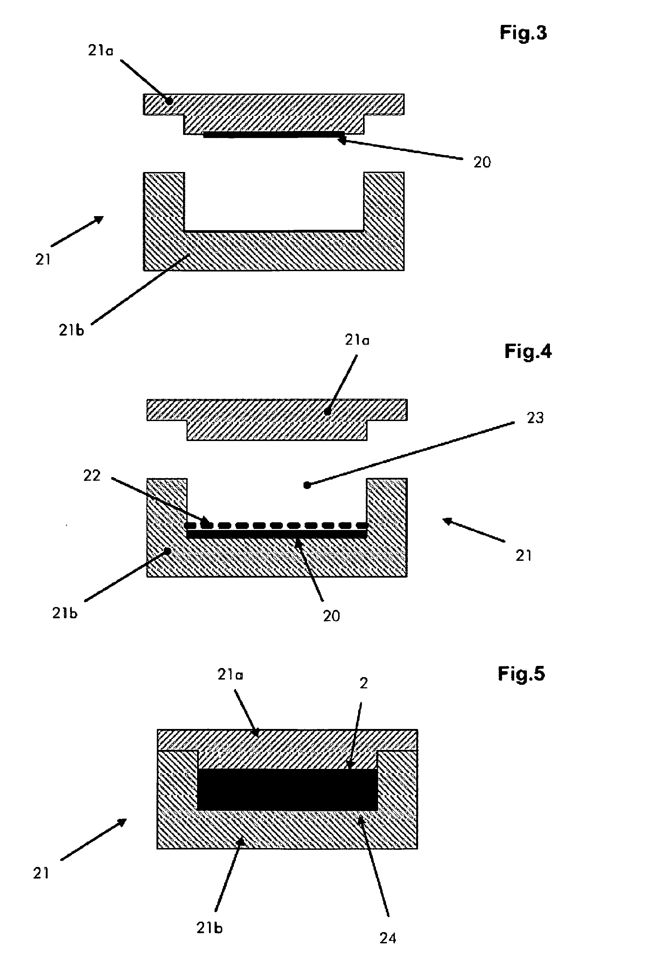

Fig. 3 zeigt schematisch ein geöffnetes Formwerkzeug 21 mit eingebrachter Schutzfolie 20. Das Formwerkzeug 21 umfasst ein Oberteil 21a und ein Unterteil 21 b, welche zusammen eine entsprechende Form einschließen. Vorliegend ist in Fig. 3 die Schutzfolie 20, die schematisch als Linie dargestellt ist, beim Einbringen jedoch schon die Konturen der Fluidkanäle 7 aufweisen kann, an dem Oberteil 21 a angeordnet.

Fig. 4 zeigt schematisch das geöffnete Formwerkzeug 21 mit eingelegter Schutzfolie 20, wobei die Schutzfolie 20 an dem Unterteil 21 b angeordnet ist. Zusätzlich zu der Schutzfolie 20 ist ein Verstärkungsmittel 22, hier in Form von Glasfasern, vorgesehen, welches zwischen der Schutzfolie 20 und dem Oberteil 21 angeordnet ist. In den verbleibenden Freiraum 23 zwischen Oberteil 21 und Unterteil 22 wird ein entsprechendes Schäummaterial zum Formen des Solargrundkörpers eingebracht, wie dies in der nächsten Figur zu erkennen ist.

Fig. 5 zeigt schematisch das Formwerkzeug 21 in geschlossenem Zustand mit einem ausgehärteten Schäummaterial 24, welches so zu einem Solarkollektorgrundkörper 2 geformt ist. Der Solarkollektorgrundkörper 2 entspricht dem in Fig. 1 dargestellten, erfindungsgemäßen Solarkollektorgrundkörper 2.

## Patentansprüche

1. Verfahren zur Herstellung eines Solarkollektors (1) mit einem Solarkollektorgehäuse (3) und einem darin angeordneten, von einem Solarfluid durchströmbaren Absorber (4), **dadurch gekennzeichnet, dass** das Solarkollektorgehäuse (3) und zumindest ein Teil des Absorbers (4) durch Umformen und/oder Urformen als integriertes Bauteil hergestellt werden.

2. Verfahren nach Anspruch 1,
**dadurch gekennzeichnet, dass** das Umformen kombiniert mit einem Schäumverfahren, insbesondere mit einem Sprayverfahren zum Herstellen von lang- oder endlosfaserverstärkten Sandwichbauteilen nach Art eines Composite-Spray-Molding-Verfahrens, durchgeführt wird.

3. Verfahren nach Anspruch 1 oder 2,
**dadurch gekennzeichnet, dass** das Schäumverfahren mittels mindestens eines Trennmittels zum besseren Entformen durchgeführt wird.

4. Verfahren nach Anspruch 3,
**dadurch gekennzeichnet, dass** mindestens eine Schutzfolie (20) als ein Trennmittel verwendet wird.

5. Verfahren nach einem der Ansprüche 1 bis 4,
**dadurch gekennzeichnet, dass** das Umformen den Schritt umfasst:
Umformen mindestens einer Schutzfolie (20), zum Beispiel mittels Thermotiefziehen, zur Ausbildung eines einen solarfluidkontaktierenden Bereich zumindest teilweise abdeckenden Wannenteils, sodass dort zumindest teilweise ein Solarfluid geeignet strömen kann.

6. Verfahren nach einem der Ansprüche 1 bis 5,
**dadurch gekennzeichnet, dass** das Schäumen die Schritte umfasst:
Einbringen des mindestens einen Trennmittels in mindestens ein Formwerkzeug (21), Einbringen mindestens eines Schäummaterials (24) in das Formwerkzeug (21) und Ausformen des Schäummaterials (24) zu dem fertigen Bauteil.

7. Verfahren nach einem der Ansprüche 1 bis 6,
**dadurch gekennzeichnet, dass** der Schritt Einbringen mindestens eines Schäummaterials (24) den Schritt umfasst:
Einbringen von Verstärkungsmitteln (22) in das Schäummaterial (24).

8. Verfahren nach einem der Ansprüche 1 bis 3,
**dadurch gekennzeichnet, dass** eine Beschichtung innerhalb der Form, ein sogenanntes In-mould-coating, insbesondere auf Basis von Polyurethan (PUR), auf die gesamte Oberfläche des Werkzeuges aufgesprüht wird.

9. Verfahren nach einem der Ansprüche 1 bis 3 und 8,
**dadurch gekennzeichnet, dass** das Schäumen die Schritte umfasst:
Einbringen des Schaummaterials, insbesondere Polyurethan (PUR), einschließlich erforderlicher Verstärkungsmaterialien ins noch offene Werkzeug, Schließen des Werkzeuges bis der Schaumwerkstoff ausgehärtet ist, Öffnen des Werkzeuges und Entformen des Bauteils.

10. Solarkollektorgrundkörper (2), insbesondere ein Solarkollektorgrundkörper (2) für einen vollflächig durchströmbaren Solarflachkollektor (1), umfassend ein Solarkollektorgehäuse (3) und einen zumindest teilweise in dem Solarkollektorgehäuse (3) angeordneten Absorber (4), wobei der Absorber (4) von einem Solarfluid durchströmbar ist,
**dadurch gekennzeichnet, dass** der Absorber (4) mehrteilig ist und zumindest ein Teil des Absorbers (4) zumindest teilweise integriert mit dem Solarkollektorgehäuse (3) ausgebildet ist.

11. Solarkollektorgrundkörper (2) nach Anspruch 10,
**dadurch gekennzeichnet, dass** das Solarkollektorgehäuse (3) aus einem Schäummaterial (24) geformt ist, in oder an welchem eine umgeformte Multifunktionsschutzfolie (20) ausgebildet ist, die solarfluidresistent und/oder zumindest ein Entformen und/oder ein Verkleben erleichternd ausgebildet ist.

12. Solarkollektor (1), insbesondere ein Solarflachkollektor, umfassend einen Solarkollektorgrundkörper (2) mit einem Solarkollektorgehäuse (3) und einem darin angeordneten, durchströmbaren Absorber (4) und eine an den Absorber (4) angrenzende Abdeckplatte (5),
**dadurch gekennzeichnet, dass** der Solarkollektorgrundkörper (2) nach einem der Ansprüche 10 bis 11 ausgebildet ist.
